# EUROPÄISCHE PATENTSCHRIFT

(11) **EP 3 846 954 B1**
(45) Veröffentlichungstag und Bekanntmachung des Hinweises auf die Patenterteilung: **19.06.2024**
(21) Anmeldenummer: 19741978.1
(22) Anmeldetag: 03.07.2019
(51) Int. Cl.: B22D 41/24, B22D 41/34, B22D 41/38

(54) **VERFAHREN ZUR WARTUNG EINES SCHIEBEVERSCHLUSSES AM AUSGUSS EINES METALLURGISCHEN GEFÄSSES SOWIE EIN SCHIEBEVERSCHLUSS**
METHOD FOR SERVICING A SLIDE CLOSURE AT THE SPOUT OF A METALLURGICAL VESSEL, AND A SLIDE CLOSURE
PROCÉDÉ D'ENTRETIEN D'UN VERROU COULISSANT AU NIVEAU DE L'ORIFICE D'UN RÉCIPIENT MÉTALLURGIQUE ET VERROU COULISSANT

(30) Priorität: 04.09.2018 CH 10512018
(43) Veröffentlichungstag der Anmeldung: 14.07.2021
(73) Patentinhaber: Refractory Intellectual Property GmbH & Co. KG, 1100 Wien (AT)
(72) Erfinder: HEINRICH, Beat, 8053 Zürich (CH); COUSIN, Jean-Daniel, 6003 Luzern (CH); LOEDEMAN, Robert Hein, 6221 Rickenbach (CH)
(74) Vertreter: Luchs, Willi
(86) Internationale Anmeldenummer: PCT/EP2019/067909
(87) Internationale Veröffentlichungsnummer: WO 2020/048658

(56) Entgegenhaltungen:
- EP-A1- 2 056 983
- DE-A1- 4 432 462
- DE-A1-102009 051 148
- JP-A- H06 190 542
- JP-B2- S5 945 464
- US-A- 5 645 793
- "AUS FACHVEREINEN - TAGUNGSBERICHTE", STAHL UND EISEN,, Bd. 94, Nr. 2, 17. Januar 1974 (1974-01-17), Seiten 70-71, XP001315671,

## Beschreibung

Die Erfindung betrifft ein Verfahren zur Wartung eines Schiebeverschlusses am Ausguss eines metallurgischen Gefässes sowie ein Schiebeverschluss nach dem Oberbegriff des Anspruchs 1 bzw. 5.

Bei einem bekannten Verfahren gemäss der Druckschrift EP-2 056 983 ist ein Verfahren bzw. eine Anlage eines am Ausguss eines Behälters für Metallschmelze montierten Schiebeverschlusses offenbart. Diese Anlage ist mit mindestens einem Werkzeugmagazin, mindestens einem Ersatzteilmagazin sowie mit Mitteln zum Öffnen und Schliessen des Schiebeverschlusses versehen. Es ist dabei ein mit einem automatischen Greifwechselsystem versehener und mit einer Steuerung wirkverbundener Roboter vorhanden, der als erstes die exakte Position des Behälters bzw. des Schiebeverschlusses selbsttätig zu erkennen vermag. Danach kann er die Mittel zum Öffnen und Schliessen des Schiebeverschlusses betätigen, und je nach Zustand der einzelnen allenfalls zu ersetzenden Komponenten aus den ihn umgebenden Magazinen Werkzeuge bzw. Ersatzteile ergreifen und Reinigungsarbeiten, Komponentenausbau sowie deren Ersatz oder Wiedereinbau durchführen.

In der Druckschrift JP S59-45464 ist ein Schiebeverschluss mit einem an einen Metallschmelze enthaltenden Behälter befestigbaren stationären Metallrahmen und einem in einem Metallrahmen verschiebbar gehaltenen Schieber-Metallrahmen offenbart, in welcher eine Schieberplatte befestigbar ist. Mittels schwenkbaren Hebeln wird der Metallrahmen und mit ihm die beidseitig zu diesem angeordneten Feder-Halterahmen via diese Zapfen am stationären Metallrahmen angedrückt. Diese können nur dann eingeschwenkt werden, wenn der Hilfsmechanismus mit den Hydraulikzylindern diese Federn eindrückt. Damit wird nicht jeweils die Schieberplatte entweder im Schieber-Metallrahmen bzw. die fixe Platte im Metallrahmen fixiert bzw. gelöst.

Davon ausgehend ist der vorliegenden Erfindung die Aufgabe zugrundegelegt worden, ein Verfahren für den Wartungsbetrieb nach der eingangs genannten Art derart weiterzuentwickeln, dass dieses den rauen Betriebsverhältnissen im Stahlwerk und insbesondere am Pfannenplatz optimal angepasst ist.

Diese Aufgabe ist erfindungsgemäss durch ein Verfahren nach den Merkmalen des Anspruchs 1 bzw. durch einen Schiebeverschluss nach den Merkmalen des Anspruchs 5 gelöst.

Bei dem erfindungsgemässen Verfahren zur Wartung eines Schiebeverschlusses am Ausguss eines metallurgischen Gefässes kann von dieser mit dem Roboter automatisierten Wartung auf eine manuelle Wartung des Schiebeverschlusses und umgekehrt gewechselt werden, bei dem beim automatisierten zum manuellen Wartungsbetrieb teils unterschiedliche Arbeitsschritte erfolgen.

Damit kann je nach Gegebenheiten am Wartungsplatz auf sehr einfache Weise von einer automatisierten zu einer manuellen Wartung gewechselt werden und dabei können die Arbeiten für einen Plattenwechsel oder für die Überwachung sowohl im einen als auch im andern Wartungsbetrieb rationell und einwandfrei durchgeführt werden.

Sehr vorteilhaft werden die Verschlussplatten bei der automatisierten Wartung jeweils zusammen mit einer Kassette ins Gehäuse und in die Schiebereinheit eingesetzt bzw. aus diesen herausgenommen, hingegen beim manuellen Wartungsbetrieb sind diese Kassetten im Gehäuse bzw. vorzugsweise auch in der Schiebereinheit fixiert und die Verschlussplatten werden manuell direkt in diese Kassetten eingesetzt und darin zentriert oder befestigt bzw. gelöst.

Beim erfindungsgemässen Schiebeverschluss ist im Gehäuse und/oder in der Schiebereinheit eine Kassette zur Aufnahme einer Verschlussplatte enthalten, welche jeweils durch selbsttätig arretierbare bzw. lösbare Verbindungsmittel darin fixierbar bzw. lösbar sind.

Zweckmässigerweise sind für diese Verbindungsmittel bei den wegnehmbaren Kassetten je auf der einen Endseite wenigstens ein Haltemittel und gegenüberliegend mindestens ein Kniehebelmechanismus, indes beim Gehäuse und der Schiebereinheit korrespondierende Ausnehmungen einerseits und Schnappelemente andererseits vorgesehen. Mit dieser Ausbildung der Kassetten können dieselben bei der automatisierten Wartung ohne zusätzlichen Funktionen direkt eingesetzt bzw. entnommen werden.

Die Erfindung sowie weitere Vorteile derselben sind nachfolgend anhand von Ausführungsbeispielen unter Bezugnahme auf die Zeichnung näher erläutert. Es zeigt:
- Fig. 1: eine perspektivische Ansicht eines erfindungsgemässen Schiebeverschlusses in aufgeklapptem Zustand;
- Fig. 2: einen Längsschnitt des Gehäuses und der Kassette des Schiebeverschlusses nach Fig. 1 beim Eindrücken der Kassette ins Gehäuse;
- Fig. 3: den Längsschnitt nach Fig. 2 in der eingedrückten fixierten Stellung der Kassette im Gehäuse;
- Fig. 4: einen Längsschnitt der Schiebereinheit und der Kassette des Schiebeverschlusses nach Fig. 1 beim Eindrücken der Kassette in die Schiebereinheit;
- Fig. 5: einen vergrösserten Schnitt des Kniehebelmechanismus beim Eindrücken der Kassette nach Fig. 2, und
- Fig. 6: den vergrösserten Schnitt des Kniehebelmechanismus nach dem Eindrücken der Kassette nach Fig. 3,
- Fig. 7: eine Draufsicht auf eine teilweise gezeigte Kassette mit dem Spannmodul für das Verspannen einer Verschlussplatte in gelöstem Zustand; und
- Fig. 8: die Draufsicht nach Fig. 7 mit dem Spannmodul im verspannten Zustand.

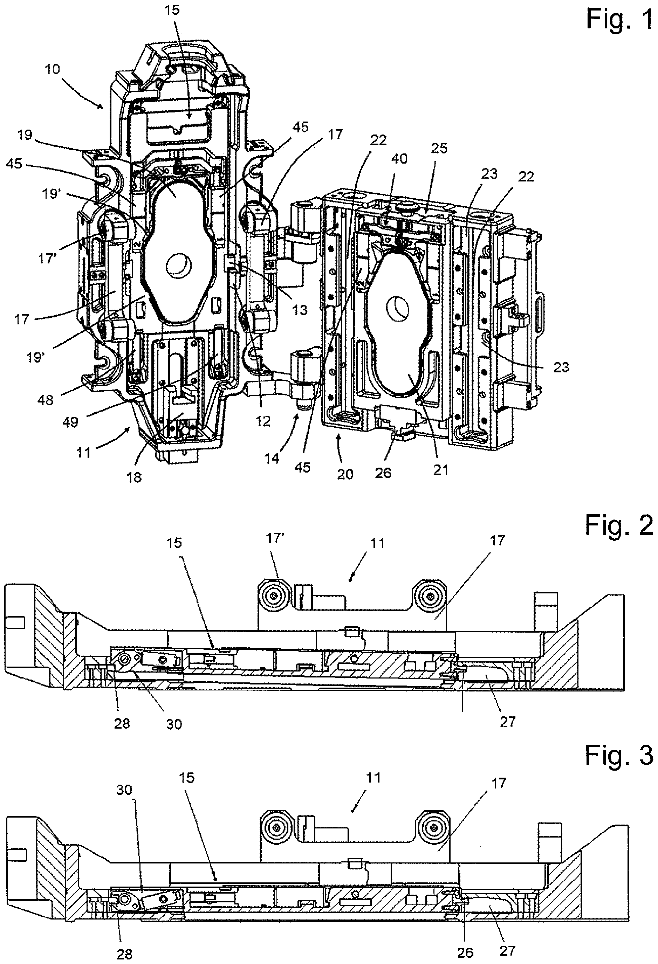

Der Schiebeverschluss 10 gemäss Fig. 1 besteht im Wesentlichen aus einem an einem Gefäss befestigbaren Gehäuse 11 und einer an diesem mittels eines Scharniers 14 schwenkbar angelenkten Schiebereinheit 20, die in aufgeklappter Offenstellung gezeigt ist. In dem Gehäuse 11 bzw. in der Schiebereinheit 20 ist jeweils eine feuerfeste Verschlussplatte 19, 21 eingespannt, die im geschlossenen Zustand des Schiebeverschlusses aneinandergepresst sind.

Ein solcher Schiebeverschluss 10 ist an sich auf herkömmliche Weise hergestellt und dieser eignet sich vorzugsweise für eine zum Abgiessen von Stahlschmelze enthaltende Pfanne bei einer Stranggiessanlage. Er könnte aber auch bei anderen Gefässen, wie bei einem Konverter oder einem Verteiler oder auch bei Öfen im Nichteisenmetallbereich verwendet werden.

Dem Gehäuse 11 sind beidseitig zu der Verschlussplatte 19 je ein senkrecht angeordnetes Haltemittel 17 mit innen- und aussenseitigen Rollen 17' zugeordnet, die im zugeklappten Zustand auf nicht näher gezeigten rampenförmigen Führungsbahnen von T-nutenförmigen Ausnehmungen 22 in der Schiebereinheit 20 gleiten. Diese Ausnehmungen 22 sind dabei mit erweiternden Öffnungen 23 versehen, durch welche die Rollen 17' eingeführt bzw. freigegeben werden. Damit ist die Schiebereinheit 20 am Gehäuse 11 von einem nicht gezeigten Antrieb üblicherweise von einer beim Gehäuse 11 befestigten Kolben/Zylindereinheit längsgeführt, von dem die verbindbaren Kupplungsteile 18, 26 beim Gehäuse 11 bzw. bei der Schiebereinheit 20 veranschaulicht sind.

Beim Zuschwenken der Schiebereinheit 20 wird diese vom Antrieb durch die Führung der Rollen 17' auf den rampenförmigen Führungsbahnen in diesen Ausnehmungen 22 gegenüber dem Gehäuse längsbewegt und dabei die Verschlussplatten 15, 21 gegeneinander verspannt und umgekehrt wieder entspannt.

Zu der näheren Funktionsweise dieses Schiebeverschlusses 10 wird auf die Druckschrift EP 1 119 428 verwiesen, in welcher die Details zu der Zusammenwirkung der Haltemittel mit der Schiebereinheit ausführlich erläutert sind.

Erfindungsgemäss ist im Gehäuse 11 und in der Schiebereinheit 20 je eine metallene Kassette 15, 25 zur Aufnahme der Verschlussplatten 15, 21 enthalten, welche jeweils durch selbsttätig arretierbare bzw. lösbare Verbindungsmittel darin fixierbar bzw. lösbar sind.

In den Kassetten 15, 25 sind je beidseitig zur Verschlussplatte 19, 21 verlaufende Spannmodule 45 je einer Verspanneinrichtung 40 zugeordnet, durch welche die Verschlussplatten 19, 21 bei ihren vier aussenseitigen Schrägflächen 19' festklemmbar sind, wie nachfolgend noch im Detail dargetan ist.

Zudem sind Zentrierelemente 13 und mit diesen korrespondierende Führungselemente 12 seitlich bei der Kassette 15 bzw. im Gehäuse 11 angeordnet. Damit wird die Kassette 15 beim Einführen in das Gehäuse 11 vorzentriert und die Zentrierelemente 13 bewirken eine Fixation derselben in Verschieberichtung der Schiebereinheit 20, um im verspannten Zustand der Platten die entstehenden Verschiebekräfte aufzunehmen.

Gemäss Fig. 2 und Fig. 3 sind für die Verbindungsmittel bei der in das Gehäuse 11 einsetzbaren Kassette 15 auf der einen schmäleren Endseite Nocken 26 als Halteelemente und gegenüberliegend vorzugsweise zwei parallel nebeneinander liegende Kniehebelmechanismen 30 angeordnet, währenddem beim Gehäuse 11 korrespondierende Ausnehmungen 27 in federnden Halteelementen 48, 49 einerseits und Schnappelemente 28 andererseits vorgesehen sind.

Wie in Fig. 2 ersichtlich ist, wird die Kassette 15 derart schräg in das Gehäuse 11 eingeführt, bis ihre Nocken 26 beim einen Ende der Kassette passgenau in diese Ausnehmung 27 im Gehäuse 11 eingeschoben sind, und folglich wird die Kassette mit dem Eindrücken durch den einklinkenden Kniehebelmechanismus 30 beim Schnappelement 28 im Gehäuse 11 ohne Spiel fixiert, wie dies in Fig. 3 gezeigt ist.

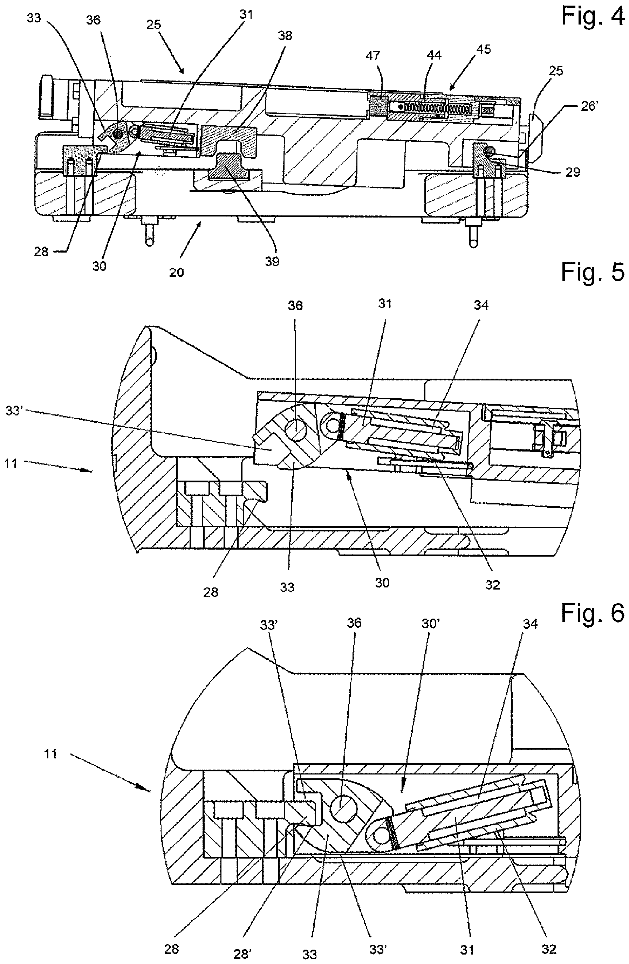

Gemäss Fig. 4 sind für die Verbindungsmittel bei der in die Schiebereinheit 20 einsetzbaren Kassette 25 auf der einen schmäleren Endseite Bolzen 26' als Halteelemente und gegenüberliegend ebenso zwei Kniehebelmechanismen 30 parallel zueinander angeordnet, währenddem bei der Schiebereinheit 20 korrespondierende Anschläge 29 als Halteelemente einerseits und Schnappelemente 28 andererseits vorgesehen sind. Zudem ist die Kassette 25 mittels Zentrierelementen 38 in korrespondierenden Führungselementen 39 in der Schiebereinheit zentriert und in Verschieberichtung gehalten, damit sich die Kassette beim Hin- und Herbewegen der Schiebereinheit nicht darin ebenso bewegt.

Die Kassette 25 wird gleichsam schräg in Schiebereinheit 20 eingeführt, bis ihre Bolzen 26' beim einen Ende der Schiebereinheit bei diesen Anschlägen 29 anliegen, und folglich wird die Kassette mit dem Eindrücken durch den einklinkenden Kniehebelmechanismus 30 beim Schnappelement 28 darin ohne Spiel fixiert.

Der jeweilige Kniehebelmechanismus 30 bei den Kassetten 15, 25 besteht, wie aus Fig. 5 und Fig. 6 vergrössert dargestellt ist, aus einem in der Kassette 15, 25 angelenkten federbelasteten Hebel 31 und einem mit diesem drehverbundenen, an der Kassette 15, 25 mittels einer Achse 36 schwenkbar gelagerten Schnapper 33. Der Hebel 31 ist mit einer Druckfeder 34 in einer Hülse 32 in seiner Längsrichtung begrenzt verstellbar und es wird damit ausser im Totpunkt ein stetig wirkendes Drehmoment gegen den Schnapper 33 erzeugt.

Im gelösten Zustand gemäss Fig. 5 ist der Schnapper 33 mit seiner Öffnung 33' gegen die Eindrückrichtung der Kassette ausgerichtet. Beim weiteren Eindrücken gelangt dieser Schnapper 33 mit seiner Öffnung 33' in Kontakt mit dem Schnappelement 28 und wird dann gedreht bis er auf seiner Unterseite 33" am Gehäuse 11 bzw. der Schiebereinheit 20 ansteht. Dabei bewirkt der am Schnapper 33 angreifende Hebel 31 durch die Druckfeder 34 nach Überschreiten des Totpunkts ein Drehmoment auf diesen Schnapper 33, bis derselbe an einer unteren Auflage 28' des Schnappelements 28 ansteht und damit das Arretieren der Kassette sichergestellt ist.

Beim Herausnehmen der Kassette 15, 25 wird durch eine bestimmte Zugkraft auf dieselbe annähernd senkrecht weg vom Gehäuse 11 bzw. von der Schiebereinheit 20 bewirkt, dass der Kniehebelmechanismus 30 durch das entstehende Drehmoment auf den Schnapper 33 bei der Auflage 28' in Richtung bis zur Offenstellung gedreht wird, wie in Fig. 5 gezeigt ist. Damit lassen sich die Kassetten 15, 25 ebenfalls selbsttätig lösen.

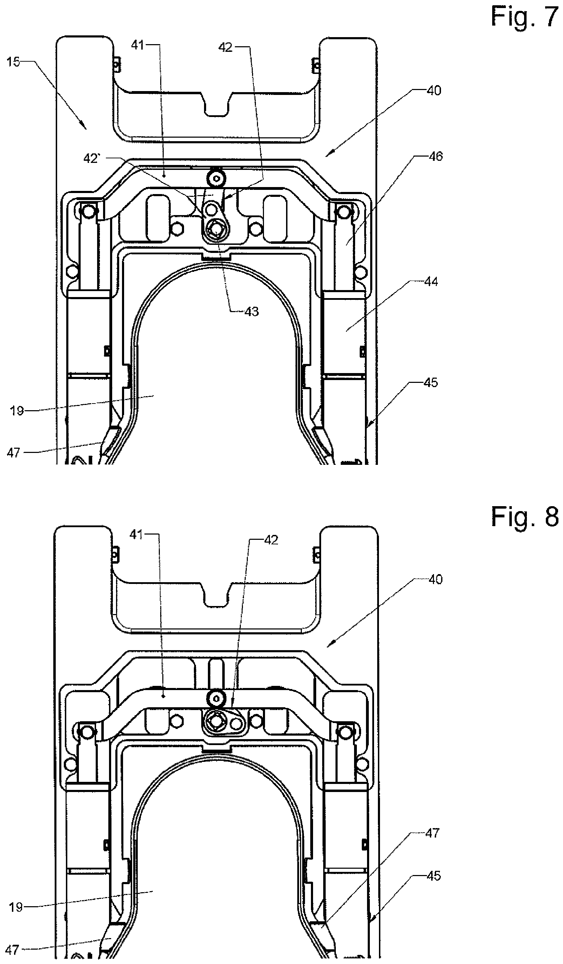

Fig. 7 und Fig. 8 zeigen im Rahmen der Erfindung eine die Verschlussplatte 19 festklemmbare Verspanneinrichtung 40 in einer Kassette 15, die sich aus einem Verstellbügel 41, aus beidseitig zur Verschlussplatte 19 verlaufenden Spannmodulen 45 mit Stösseln 46 und Keilen 47 sowie einem Kniehebelgestänge 42 zusammensetzt. Die Spannmodule 45 sind in der Kassette 15 eingebettet und sie weisen je ein Federorgan 44 auf, welches mit einem jeweiligen Stössel 46 verbunden ist und bewirkt, dass im verspannten Zustand ein Federdruck in Verspannungsrichtung erfolgt, wie dies auch in Fig. 4 ersichtlich ist. Dieses Kniehebelgestänge 42 besteht aus zwei Hebeln 42', die mit dem Verstellbügel 41, der Kassette 15 und zueinander gelenkig verbunden sind. Der eine Hebel 42' weist eine Vierkantöffnung oder dergleichen auf, in die ein Drehschlüssel einsteckbar ist und er von Hand gedreht werden kann und damit ein Öffnen bzw. Schliessen der Verspanneinrichtung ermöglicht wird.

Diese Verspanneinrichtung 40 ist in Fig. 7 in der Offenstellung gezeigt, bei der diese mit den Stösseln 46 verstellbaren Keile 47 zurückgezogen sind und damit die Verschlussplatte einsetzbar oder entnehmbar ist. Die beiden Hebel 42' sind über den Totpunkt geschwenkt und bewirken zusammen mit dem Federdruck, dass der Verstellbügel 41 in der geöffneten Stellung verbleibt.

Durch ein Verdrehen in Gegenrichtung kann der Verstellbügel und mit ihm die Stössel 46 als auch die Keile 47 in Richtung der Verschlussplatte bewegt und dann ein Verklemmen der Platte 19 ermöglicht werden, wie dies in Fig. 8 gezeigt ist.

Bei der in die Schiebereinheit 20 einsetzbaren Kassette 25 ist eine gleiche Verspanneinrichtung 40 für die Verspannung der als Schieberplatte vorgesehenen Verschlussplatte wie oben erläutert bei der andern Kassette 15 vorgesehen.

Der oben ausführlich erläuterte Schiebeverschluss 10 eignet sich für eine automatisierte Wartung mittels eines nicht näher gezeigten Roboters an einem Wartungsplatz, wie dies in der eingangs gewürdigten Druckschrift EP 2 056 983 ausführlich erläutert und veranschaulicht ist. Dieses als Pfanne vorgesehene Gefäss wird nach dem Entleeren der Metallschmelze am Wartungsplatz annähernd in liegender Position hingestellt, so dass der an seinem Ausguss montierte Schiebeverschluss seitlich zu liegen kommt und dadurch für diese des Öftern erforderlichen Wartung gut zugänglich ist.

Mit einem am Roboter montierbaren Erkennungssystem kann die exakte Position des Gefässes und des Schiebeverschlusses 10 am Wartungs- bzw. Pfannenplatz ermittelt werden. Nach dieser Erkennung wird vom Roboter ein Antrieb am Schiebeverschluss montiert und an eine Druckquelle angeschlossen, durch welchen der Schiebeverschluss 10 entspannt und die Schiebereinheit 20 ausgeklappt werden kann, wie in Fig. 1 ersichtlich ist. Anschliessend kann vom Roboter mitunter je eine feuerfeste Verschlussplatte 19, 21 in diese Schiebereinheit 20 bzw. in das Gehäuse 11 eingesetzt bzw. aus diesen herausgenommen werden.

Erfindungsgemäss kann von dieser mit dem Roboter automatisierten Wartung auf eine manuelle Wartung des Schiebeverschlusses 10 am Wartungsplatz und umgekehrt gewechselt werden, bei dem beim automatisierten zum manuellen Wartungsbetrieb teils unterschiedliche Arbeitsschritte erfolgen.

Bei der automatisierten Wartung werden die Verschlussplatten 19, 21 zusammen mit der metallenen Kassette 15, 25 von einem Magazin vom Roboter gegriffen und entsprechend ins Gehäuse 11 und in die Schiebereinheit 20 eingesetzt bzw. aus diesen herausgenommen, hingegen beim manuellen Wartungsbetrieb sind diese Kassetten 15, 25 im Gehäuse 11 bzw. in der Schiebereinheit 20 fixiert und die Verschlussplatten 19, 21 werden manuell direkt in diese Kassetten 15, 25 eingesetzt und darin zentriert oder befestigt bzw. gelöst.

Vorteilhaft wird ferner die nicht gezeigte Halterung für den Antrieb mit dem Kupplungsteil 18 beim Gehäuse 11 bei automatisierter gegenüber der manuellen Wartung auf die gegenüberliegende Seite montiert, damit sich eine einfachere Handhabung ergibt.

Die Wartung des Schiebeverschlusses 10 kann aber im Rahmen der Erfindung auch in einem Mischbetrieb mit teils manuellen und teils automatisierten Arbeitsschritten erfolgen. Es können dabei beispielsweise der Antrieb vom Roboter montiert werden und von ihm auch die Verschlussplatten in den Kassetten gewechselt werden, währenddem manuell Reinigungsarbeiten bzw. die Platten begutachtet werden, wie ihr Zustand nach dem Giessen ist.

Die Erfindung ist mit dem obigen Ausführungsbeispiel ausreichend dargetan. Sie könnte aber selbstverständlich noch durch andere Varianten ausgeführt sein. So könnte dieses selbsttätig arretierbare bzw. lösbare Verbindungsmittel für die Kassetten anstelle des Kniehebelmechanismus durch ein Türklinkensystem oder ein Schnappverschluss mit einer eindrückbaren gebogenen Feder oder ähnlichem realisiert sein.

Ebenso könnten diese Verbindungsmittel derart angeordnet sein, dass zum Beispiel der Kniehebelmechanismus umgekehrt im Gehäuse bzw. in der Schiebereinheit und die korrespondierenden Ausnehmungen und Schnappelemente in der jeweiligen Kassette vorhanden wären. Zudem könnten Verbindungsmittel vorgesehen sein, die längsseitig bei den Kassetten und dem Gehäuse bzw. der Schiebereinheit zum Beispiel als Schnappelemente positioniert wären.

Im Prinzip könnte auch nur eine auswechselbare Kassette im Gehäuse vorgesehen sein, während die Schiebereinheit als Ganzes vom Roboter entnommen bzw. wieder bei den am Gehäuse befindlichen Scharnieren eingehängt würde.

Der Schiebeverschluss könnte auch derart ausgestaltet sein, dass bei diesem anstelle eines Gehäuses und einer an diesem verschiebbar gehaltenen Schiebereinheit ein zusätzlicher Schieberdeckel vorgesehen sein könnte, welcher am Gehäuse durch Befestigungsmittel befestigbar wäre. Bei einem automatisierten Betrieb könnte der Roboter entsprechend diese Befestigungsmittel mit einem geeigneten Betätigungseinheit festziehen bzw. lösen.

## Patentansprüche

1. Verfahren zur Wartung eines Schiebeverschlusses am Ausguss eines metallurgischen Gefässes, bei dem mittels eines Roboters für eine automatisierte Wartung die exakte Position des Gefässes und des Schiebeverschlusses (10) am Wartungsplatz selbsttätig ermittelt und anschliessend von diesem ein Antrieb am Schiebeverschluss (10) montiert wird, durch welchen der Schiebeverschluss (10) entspannt oder dass derselbe durch Lösen von Befestigungsmitteln via Roboter entspannt und aufgeklappt wird, und anschliessend vom Roboter zumindest je eine feuerfeste Verschlussplatte (19, 21) in eine Schiebereinheit (20) und/oder in ein Gehäuse (11) des Schiebeverschlusses (10) eingesetzt bzw. aus diesen herausgenommen werden kann, **dadurch gekennzeichnet, dass** von dieser mit dem Roboter automatisierten Wartung auf eine manuelle Wartung des Schiebeverschlusses (10) am Wartungsplatz und umgekehrt gewechselt werden kann, bei dem beim automatisierten zum manuellen Wartungsbetrieb teils unterschiedliche Arbeitsschritte erfolgen, wobei die Verschlussplatten (19, 21) bei der automatisierten Wartung zusammen mit einer Kassette (15, 25) ins Gehäuse (11) und in die Schiebereinheit (20) eingesetzt bzw. aus diesen herausgenommen werden, hingegen diese Kassetten (15, 25) beim manuellen Wartungsbetrieb im Gehäuse (11) bzw. in der Schiebereinheit (20) fixiert sind und die Verschlussplatten (19, 21) manuell direkt in diese im Schiebeverschluss (10) verbleibenden Kassetten eingesetzt und darin zentriert oder befestigt bzw. gelöst werden.

2. Verfahren nach Anspruch 1, **dadurch gekennzeichnet, dass**
diese Kassetten (15, 25) mit der jeweils darin eingesetzten Verschlussplatte (19, 21) beim automatisierten Wartungsbetrieb vom Roboter gegriffen und in das Gehäuse (11) bzw. in die Schiebereinheit (20) eingedrückt und diese darin selbsttätig arretiert und umgekehrt vom Roboter aus diesen herausgezogen und dabei vorzugsweise selbsttätig gelöst werden.

3. Verfahren nach Anspruch 1 oder 2, **dadurch gekennzeichnet, dass** die Kassette (15) mittels Zentrierelementen (13) in korrespondierenden Führungselementen (12) seitlich beim Gehäuse (11) zentriert und in Verschieberichtung gehalten wird.

4. Verfahren nach Anspruch 1, **dadurch gekennzeichnet, dass**
die Wartung des Schiebeverschlusses (10) in einem Mischbetrieb mit teils manuellen und teils automatisierten Arbeitsschritten erfolgt.

5. Schiebeverschluss am Ausguss eines metallurgischen Gefässes, zur Durchführung des Verfahrens nach einem der Ansprüche 1 bis 4, mit einem an dem Gefäss befestigbaren Gehäuse (11) und einer zu diesem längsverschiebbaren Schiebereinheit (20), in welche je eine feuerfeste Verschlussplatte (19, 21) einsetzbar sind, **dadurch gekennzeichnet, dass** im Gehäuse (11) und/oder in der Schiebereinheit (20) eine Kassette (15, 25) zur Aufnahme einer Verschlussplatte (19, 21) enthalten ist, welche jeweils durch selbsttätig arretierbare bzw. vorzugsweise selbsttätig lösbare Verbindungsmittel darin fixierbar bzw. lösbar ist, wobei für die Verbindungsmittel bei den wegnehmbaren Kassetten (15, 25) je auf der einen Endseite wenigstens ein Halteelement (26, 26') oder mindestens ein Kniehebelmechanismus (30) und gegenüberliegend mindestens ein Kniehebelmechanismus (30) vorgesehen ist, indes beim Gehäuse (11) und der Schiebereinheit (20) mindestens je ein korrespondierendes Aufnahmeelement (27, 29) einerseits und ein Schnappelement (28) andererseits vorgesehen sind, wobei die jeweilige Kassette (15, 25) mit dem Halteelement (26, 26') im Gehäuse bzw. in der Schiebereinheit winklig einschiebbar und folglich mit dem Eindrücken durch den einklinkenden Kniehebelmechanismus (30) beim Schnappelement (28) darin fixierbar ist, wobei eine die jeweilige Verschlussplatte (19, 21) festklemmbare Verspanneinrichtung (40) in einer jeweiligen Kassette (15, 25) enthalten ist, die sich aus einem Verstellbügel (41), aus beidseitig zur Verschlussplatte verlaufenden Spannmodulen (45) mit Stösseln (46) und Keilen (47) sowie einem Kniehebelgestänge (42) zum Betätigen der Verspanneinrichtung (40) zusammensetzt.

6. Schiebeverschluss nach Anspruch 5, **dadurch gekennzeichnet, dass**
ein jeweiliger Kniehebelmechanismus (30) einen in der Kassette (15, 25) angelenkten federbelasteten Hebel (31) und einen mit diesem drehverbundenen, an der Kassette mittels einer Achse (36) schwenkbar gelagerten Schnapper (33) aufweist, wobei der Hebel (31) mit einer Druckfeder (34) in einer Hülse (32) in seiner Längsrichtung begrenzt verstellbar und damit ein stetig wirkendes Drehmoment beim Schnapper (33) erzeugbar ist.

7. Schiebeverschluss nach Anspruch 5 oder 6, **dadurch gekennzeichnet, dass**
als Halteelemente mindestens ein Nocken (26) oder ein Bolzen (26') in der jeweiligen Kassette (15, 25) und beim Gehäuse (11) und der Schiebereinheit (20) mindestens je eine korrespondierende Ausnehmung (27) bzw. ein Anschlag (29) zugeordnet sind.

8. Schiebeverschluss nach Anspruch 6 oder 7, **dadurch gekennzeichnet, dass**
beim Herausnehmen der Kassette (15, 25) durch eine bestimmte Zugkraft auf dieselbe annähernd senkrecht weg vom Gehäuse (11) bzw. weg von der Schiebereinheit (20) erzeugbar ist, bei der dieser Kniehebelmechanismus (30) durch das entstehende Drehmoment auf den Schnapper (33) bei der Auflage (28') in Richtung bis zur Offenstellung drehbar ist, wodurch die Kassetten selbsttätig lösbar sind.

9. Schiebeverschluss nach Anspruch 5, **dadurch gekennzeichnet, dass**
die Kassette (15) mit seitlichen Zentrierelementen (13) und das Gehäuse (11) mit korrespondierenden Führungselementen (12) versehen sind.

10. Schiebeverschluss nach Anspruch 5, **dadurch gekennzeichnet, dass**
die Spannmodule (45) in der Kassette (15, 25) eingebettet sind und je ein Federorgan (44) aufweisen, welches mit einem jeweiligen Stössel (46) verbunden ist und bewirkt, dass im verspannten Zustand ein Federdruck in Verspannungsrichtung erfolgt.

## Claims

1. Method for maintenance of a sliding closure on the outlet of a metallurgical vessel with which, by means of a robot for an automated maintenance, the precise position of the vessel and the sliding closure (10) at the maintenance location is determined and a drive is then mounted on the sliding closure (10), by means of which the sliding closure (10) is released or the same is released by disengaging fastening means via the robot and unfolded, at least one refractory closure plate (19, 21) can be inserted a slider unit (20) and/or in a housing (11) of the sliding closure (10) or can be removed from this, **characterised in that**
this automated maintenance by robot can be changed to manual maintenance of the sliding closure (10), at the maintenance location, or vice versa where, with automated to manual maintenance, there are different operation stages in part, whereby with the automated maintenance, the closure plates (19, 21) are inserted together with a cassette (15, 25) into the housing (11) and into the slider unit (20) or are removed from these, whereas, with the manual maintenance, these cassettes (15, 25) are fixed in the housing (11) or in the slider unit (20) and the closure plates (19, 21) are inserted manually directly into these cassettes remaining in the sliding closure (10) and are centred therein or fastened or respectively released.

2. Method in accordance with claim 1, **characterised in that**
these cassettes (15, 25) with the closure plate (19, 21) respectively inserted therein are gripped by the robot during the automated maintenance and pushed into the housing (11) or into the slider unit (20) and these are automatically locked therein and conversely are withdrawn from this by the robot and preferably are automatically released.

3. Method in accordance with claim 1 or 2, **characterised in that**
the cassette (15) is centred by means of centring elements (13) in corresponding guide elements (12) laterally to the housing (11) and are retained in the displacement direction.

4. Method in accordance with claim 1, **characterised in that**
the maintenance of the sliding closure (10) is carried out in a mixed operation with work steps partly manual and partly automated.

5. Sliding closure at the outlet of a metallurgical vessel, for implementation of the method in accordance with one of the claims 1 to 4, with a housing (11) that can be fastened to the vessel and a slider unit (20), displaceable longitudinally to it, in which respectively a refractory closure plate (19, 21) can be inserted, **characterised in that**
a cassette (15, 25) is contained in the housing (11) and/or in the slider unit (20) to receive a closure plate (19, 21), which respectively can be fixed or released therein by automatically lockable and preferably automatically releasable connecting means, whereby for the connecting means for the removable cassettes (15, 25), on one end face of each at least one retaining element (26, 26') or at least one elbow lever mechanism (30) and opposite at least one elbow lever mechanism (30) is provided, while for the housing (11) and the slider unit (20) at least one corresponding receiver element (27, 29) on one side and a snap-in element (28) on the other side are provided, wherein the respective cassette (15, 25) with the retaining element (26, 26') can be pushed into the housing or into the slider unit at an angle und then be fixed there by the pressure through the engagement of the elbow lever mechanism (30) with the snap-in element (28), wherein a clamping device (40) which can fixedly clamp the respective closure plate (19, 21) is contained in a corresponding cassette (15, 25), and is composed of an adjustment clip (41), of clamping modules (45) extending either side of the closure plate with rams (46) and wedges (47) together with an elbow lever linkage (42) for actuating the clamping device (40).

6. Sliding closure in accordance with claim 5, **characterised in that**
a respective elbow lever mechanism (30) comprises a spring-loaded lever (31) pivotally connected in the cassette (15, 25) and a snapper (33) rotationally connected with this, pivotably mounted on the cassette by means of a spindle (36), wherein the lever (31) has limited adjustment in its longitudinal direction with a compression spring (34) in a sleeve (32) and with it a continuously acting torque can be produced for the snapper (33).

7. Sliding closure in accordance with claim 5 or 6, **characterised in that**
as retaining elements, at least one cam (26) or a pin (26') in the respective cassette (15, 25) and in the housing (11) and the slider unit (20) at least one corresponding recess (27) or one abutment (29) are associated.

8. Sliding closure in accordance with claim 6 or 7, **characterised in that**
for the removal of the cassette (15, 25) a specific tensile force can be produced approximately perpendicularly away from the housing (11) or away from the slider unit (20), in which this elbow lever mechanism (30) can be rotated by the torque resulting on the snapper (33) with the lower support (28') in direction until the open position, whereby the cassettes can be automatically released.

9. Sliding closure in accordance with claim 5, **characterised in that**
the cassette (15) is provided with lateral centring elements (13) and the housing (11) with corresponding guide elements (12).

10. Sliding closure in accordance with claim 5, **characterised in that**
the clamping modules (45) are embedded in the cassette (15, 25) and have a respective spring member (44), which is connected to a respective ram (46) acting to produce a spring pressure in the clamped state in direction of the clamping.

## Revendications

1. Procédé d'entretien d'une fermeture coulissante d'une busette de coulée d'un récipient métallurgique, dans lequel il est déterminé de soi-même au moyen d'un robot, pour un entretien automatisé, la position exacte du récipient et de la fermeture (10) coulissante à l'emplacement d'entretien et il est monté ensuite, par celui-ci, un entraînement de la fermeture (10) coulissante, par lequel la fermeture (10) coulissante est débloquée ou en ce que la même est débloquée, par relâchement de moyens de fixation par l'intermédiaire du robot, et rabattue, et ensuite, peut être insérée par le robot au moins respectivement une plaque (19, 21) réfractaire de fermeture dans une unité (20) de tiroir et/ou dans une enveloppe (11) de la fermeture (10) coulissante ou en être retirée, **caractérisé en ce que**
l'on peut passer de cet entretien automatisé par le robot à un entretien manuel de la fermeture (10) coulissante à l'emplacement d'entretien et inversement, dans lequel dans le service d'entretien d'automatisé à manuel, il s'effectue des stades opératoires, en partie différents, dans lequel les plaques (19, 21) de fermeture dans l'entretien automatisé, sont insérées ensemble avec une cassette (15, 25) dans l'enveloppe (11) et dans l'unité (20) de tiroir ou en sont retirées, tandis que ces cassettes (15, 25) dans le service d'entretien manuel sont immobilisées dans l'enveloppe (11) ou dans l'unité (20) de tiroir et les plaques (19, 21) de fermeture sont insérées manuellement dans ces cassettes restant dans la fermeture (10) coulissante et y sont centrées ou fixées ou détachées.

2. Procédé suivant la revendication 1, **caractérisé en ce que** ces cassettes (15, 25) avec la plaque (19, 21) de fermeture respective qui y est insérée, sont, lors du service d'entretien automatisé, prises par le robot et poussées dans l'enveloppe (11) ou dans l'unité (20) de tiroir et y sont arrêtées d'elles-mêmes et inversement en sont retirées par le robot et ainsi en sont détachées, de préférence d'elles-mêmes.

3. Procédé suivant la revendication 1 ou 2, **caractérisé en ce que**
la cassette (15) est centrée latéralement à l'enveloppe (11) au moyen d'éléments (13) de centrage dans des éléments (12) de guidage correspondants et est maintenue dans la direction du coulissement.

4. Procédé suivant la revendication 1, **caractérisé en ce que** l'entretien de la fermeture (10) coulissante s'effectue dans un service mixte par des stades opératoires en partie manuels et en partie automatisés.

5. Fermeture coulissante à la busette de coulée d'un récipient métallurgique, pour effectuer le procédé suivant l'une des revendications 1 à 4, comprenant une enveloppe (11) pouvant être fixée au récipient et une unité (20) de tiroir, qui peut coulisser longitudinalement par rapport à celle-ci et dans laquelle peuvent être insérées respectivement une plaque (19, 21) réfractaire de fermeture, **caractérisée en ce que**, dans l'enveloppe (11) et/ou dans l'unité (20) de tiroir, est contenue une cassette (15, 25) de réception d'une plaque (19, 21) de fermeture, laquelle peut y être immobilisée ou détachée respectivement par des moyens d'assemblage pouvant être arrêtés d'eux-mêmes ou être détachés, de préférence d'eux-mêmes, dans laquelle il est prévu pour les moyens d'assemblage pour les cassettes (15, 25) pouvant être retirées respectivement d'un côté d'extrémité, au moins un élément (26, 26') de maintien ou au moins un mécanisme (30) à levier coudé et en face au moins un mécanisme (30) à levier coudé, tandis qu'il est prévu pour l'enveloppe (11) et l'unité (20) de tiroir au moins respectivement un élément (27, 29) correspondant de réception d'une part et un élément (28) d'encliquetage d'autre part, dans laquelle la cassette (15, 25) respective peut, avec l'élément (26, 26') de maintien, être insérée suivant un angle dans l'enveloppe ou dans l'unité de tiroir et, en conséquence, y être immobilisée à l'élément (28) d'encliquetage par la poussée par le mécanisme (30) à levier coudé s'encliquetant, dans laquelle un dispositif (40) de blocage, pouvant serrer la plaque (19, 21) respective de fermeture, est contenue dans une cassette (15, 25) respective, qui se compose d'un étrier (41) de réglage, de modules (45) de serrage s'étendant des deux côtés de la plaque de fermeture et ayant des poussoirs (46) et des coins (47) ainsi que d'une tringlerie (42) à levier coudé pour l'actionnement du dispositif (40) de blocage.

6. Fermeture coulissante suivant la revendication 5, **caractérisée en ce que**
un mécanisme (30) respectif à levier coudé a un levier (31) articulé dans la cassette (15, 25) et soumis à l'action d'un ressort et un cliquet (33) assemblé à rotation avec celui-ci et pouvant pivoter sur la cassette au moyen d'un axe (36), dans laquelle le levier (31) peut être déplacé de manière limitée dans sa direction longitudinale par un ressort (34) de compression dans un manchon (32) et il peut être ainsi produit au cliquet (33) un couple à effet constant.

7. Fermeture coulissante suivant la revendication 5 ou 6, **caractérisée en ce que**
il peut être associé comme élément de maintien au moins un ergot (26) ou un axe (26') dans la cassette (15, 25) respective et à l'enveloppe (11) et à l'unité (20) de tiroir au moins respectivement un évidement (27) correspondant ou une butée (29) .

8. Fermeture coulissante suivant la revendication 6 ou 7, **caractérisée en ce que**
lors du retrait des cassettes (15, 25), il peut être produit une force de traction déterminée sur celles-ci à peu près perpendiculairement, en s'éloignant de l'enveloppe (11) ou en s'éloignant de l'unité (20) de tiroir, pour laquelle ce mécanisme (30) à levier coudé peut, par le couple créé sur le cliquet (33), être, à l'appui (28'), tourné dans le sens allant jusqu'à la position d'ouverture, grâce à quoi les cassettes peuvent être détachées d'elles-mêmes.

9. Fermeture coulissante suivant la revendication 5, **caractérisée en ce que**
les cassettes (15) sont pourvues d'éléments (13) latéraux de centrage et l'enveloppe (11) d'éléments (12) de guidage correspondants.

10. Fermeture coulissante suivant la revendication 5, **caractérisée en ce que**
les modules (45) de blocage sont incorporés dans la cassette (15, 25) et ont chacun un organe (44) de ressort, qui est relié à un poussoir (46) respectif et fait que, dans l'état bloqué, il se produit une pression de ressort dans le sens du blocage.
